(19) Europäisches Patentamt
European Patent Office
Office européen des brevets

(11) **EP 4 044 132 A1**

(12) **EUROPEAN PATENT APPLICATION**

(43) Date of publication:
**17.08.2022  Bulletin 2022/33**

(51) International Patent Classification (IPC):
**G06V 30/10** *(2022.01)*        **G06V 10/82** *(2022.01)*

(21) Application number: **22159504.4**

(52) Cooperative Patent Classification (CPC):
**G06V 30/10; G06V 10/82;** G06F 40/109

(22) Date of filing: **01.03.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2021  CN 202110487527**

(71) Applicant: **BEIJING BAIDU NETCOM SCIENCE TECHNOLOGY CO., LTD.**
**No. 10 Shangdi 10th Street**
**Haidian District**
**Beijing 100085 (CN)**

(72) Inventors:
• **LIU, Jiaming**
  **Beijing, 100085 (CN)**
• **TANG, Licheng**
  **Beijing, 100085 (CN)**
• **HONG, Zhibin**
  **Beijing, 100085 (CN)**

(74) Representative: **Carpmaels & Ransford LLP**
**One Southampton Row**
**London WC1B 5HA (GB)**

(54) **METHOD AND APPARATUS FOR TRAINING ADVERSARIAL NETWORK MODEL, METHOD AND APPARATUS FOR BUILDING CHARACTER LIBRARY, AND DEVICE**

(57)    There is provided a method for training an adversarial network model, which relates to a field of artificial intelligence technology, in particular to a field of computer vision and deep learning technologies. The adversarial network model includes a generation model and a discrimination model, and the method includes: generating a generated character based on a content character sample having a base font and a style character sample having a style font and generating a reconstructed character based on the content character sample, by using the generation model; calculating a basic loss of the generation model based on the generated character and the reconstructed character, by using the discrimination model; calculating a character loss of the generation model through classifying the generated character by using a trained character classification model; and adjusting a parameter of the generation model based on the basic loss and the character loss. An apparatus for training an adversarial network model, a method and an apparatus for building a character library, an electronic device and a storage medium are also provided.

200

FIG. 2

EP 4 044 132 A1

**Description**

TECHNICAL FIELD

The present disclosure relates to a field of artificial intelligence technology, in particular to a field of computer vision and deep learning technologies. Specifically, the present disclosure provides a method and an apparatus for training an adversarial network model, a method and an apparatus for building a character library, an electronic device and a storage medium.

BACKGROUND

With the rapid development of the Internet, people have an increasing demand for the diversity of image styles. For example, research and attention have been brought into presenting fonts having handwriting styles or various artistic styles in images.

At present, some existing font generation solutions based on deep learning are greatly affected by the quality and quantity of data, and the effect of generated style fonts is unstable.

SUMMARY

The present disclosure provides a method and an apparatus for training an adversarial network model, a method and an apparatus for building a character library, an electronic device and a storage medium.

According to an aspect, a method for training an adversarial network model is provided, and the method includes: generating a generated character based on a content character sample having a base font and a style character sample having a style font and generating a reconstructed character based on the content character sample, by using the generation model; calculating a basic loss of the generation model based on the generated character and the reconstructed character, by using the discrimination model; calculating a character loss of the generation model through classifying the generated character by using a trained character classification model; and adjusting a parameter of the generation model based on the basic loss and the character loss.

According to another aspect, a method for building a character library is provided, and the method includes: generating a new character by using an adversarial network model based on a content character having a base font and a style character having a style font, wherein the adversarial network model is trained according to the method for training an adversarial network model; and building a character library based on the generated new character.

According to another aspect, an apparatus for training an adversarial network model is provided, and the apparatus includes: a generation module configured to generate a generated character based on a content character sample having a base font and a style character sample having a style font and generating a reconstructed character based on the content character sample, by using the generation model; a basic loss calculation module configured to calculate a basic loss of the generation model based on the generated character and the reconstructed character, by using the discrimination model; a character loss calculation module configured to calculate a character loss of the generation model through classifying the generated character by using a trained character classification model; and an adjustment module configured to adjust a parameter of the generation model based on the basic loss and the character loss.

According to another aspect, an apparatus for building a character library is provided, and the apparatus includes: a producing module configured to generate a new character by using an adversarial network model based on a content character having a base font and a style character having a style font, wherein the adversarial network model is trained according to the method for training an adversarial network model; and a building module configured to build a character library based on the generated new character.

According to another aspect, an electronic device is provided, including: at least one processor; and a memory communicatively connected with the at least one processor; wherein, the memory stores an instruction executable by the at least one processor, and the instruction is executed by the at least one processor to cause the at least one processor to perform the method provided by the present disclosure.

According to another aspect, a non-transitory computer-readable storage medium storing a computer instruction is provided, wherein the computer instruction is configured to cause the computer to perform the method provided by the present disclosure.

According to another aspect, a computer program product is provided, including a computer program, wherein the computer program, when executed by a processor, implements the method provided by the present disclosure.

It should be understood that the content described in this section is not intended to identify key or important features of the embodiments of the present disclosure, nor is it intended to limit the scope of the present disclosure. Other features of the present disclosure will be easily understood through the following description.

BRIEF DESCRIPTION OF THE DRAWINGS

The drawings are used to better understand the solutions, and do not constitute a limitation to the present disclosure. Wherein:

FIG. 1 is a schematic diagram of an exemplary system architecture in which a method for training an adversarial network model and/or a method for building a character library according to an embodiment of the present disclosure may be applied;

FIG. 2 is a flowchart of a method for training an adversarial network model according to an embodiment of the present disclosure;

FIG. 3 is a schematic diagram of a method for training an adversarial network model according to an embodiment of the present disclosure;

FIG. 4 is a flowchart of a method for training an adversarial network model according to another embodiment of the present disclosure;

FIG. 5 is a flowchart of a method for training an adversarial network model according to another embodiment of the present disclosure;

FIG. 6A is a schematic diagram of a processing principle of a generation model according to an embodiment of the present disclosure;

FIG. 6B is a schematic diagram of a processing principle of a generation model according to another embodiment of the present disclosure;

FIG. 7 is a diagram of an appearance of a generated style font according to an embodiment of the present disclosure;

FIG. 8 is a flowchart of a method for building a character library according to an embodiment of the present disclosure;

FIG. 9 is a block diagram of an apparatus for training an adversarial network model according to an embodiment of the present disclosure;

FIG. 10 is a block diagram of an apparatus for building a character library according to an embodiment of the present disclosure; and

FIG. 11 is a block diagram of an electronic device for a method for training an adversarial network model and/or a method for building a character library according to an embodiment of the present disclosure.

DETAILED DESCRIPTION OF EMBODIMENTS

The following describes exemplary embodiments of the present disclosure with reference to the drawings, which include various details of the embodiments of the present disclosure to facilitate understanding, and should be regarded as merely exemplary. Therefore, those skilled in the art should recognize that various changes and modifications may be made to the embodiments described herein without departing from the scope and spirit of the present disclosure. Likewise, for clarity and conciseness, descriptions of well-known functions and structures are omitted in the following description.

Generating fonts having handwriting styles or various artistic styles is a new task in a field of image style transfer. Image style transfer is to convert an image from a style into another style while keeping a content of the image unchanged, which is a popular research direction for deep learning application.

At present, some existing font generation solutions based on deep learning, especially the font generation solution based on GAN (Generative Adversarial Networks) network model, requires a lot of data for training. The quality and quantity of data may greatly affect a final output. In practice, the number of handwritten characters that users may provide is very small, which limits the performance of most GAN networks on this task.

The embodiments of the present disclosure provide a method for training an adversarial network model and a method for building a character library by using the trained model. A style character having a style font and a content character having a basic font are used as a training data, and a character classifier is used to train the adversarial network model, so that the trained adversarial network model may achieve a more accurate font transfer.

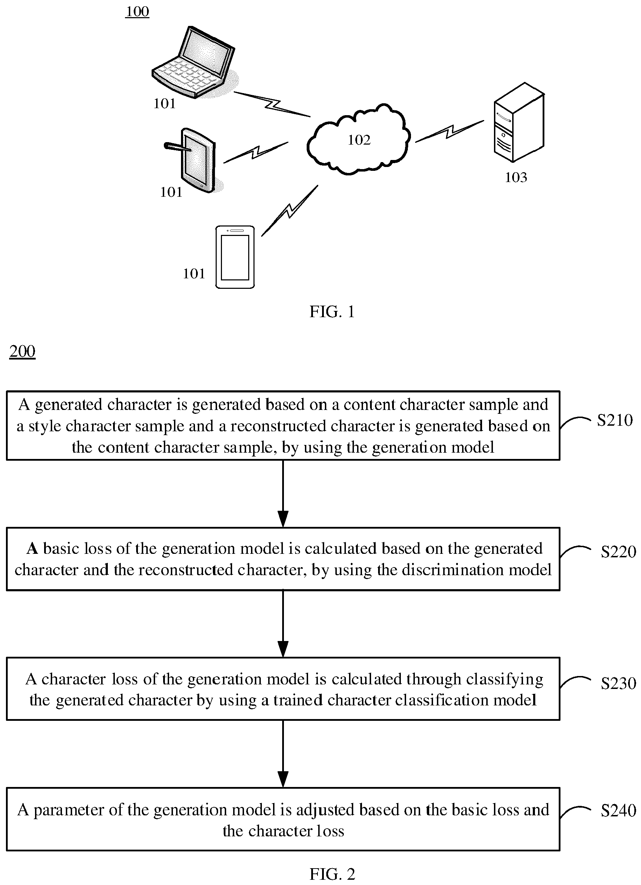

FIG. 1 is a schematic diagram of an exemplary system architecture in which a method for training an adversarial network model and/or a method for building a character library according to an embodiment of the present disclosure may be applied. It should be noted that FIG. 1 is only an example of a system architecture to which the embodiments of the present disclosure may be applied, so as to help those skilled in the art to understand the technical content of the present disclosure, but it does not mean that the embodiments of the present disclosure may not be used for other devices, systems, environments or scenes.

As shown in FIG. 1, a system architecture 100 according to this embodiment may include a plurality of terminal devices 101, a network 102 and a server 103. The network 102 is used to provide a medium of a communication link between the terminal device 101 and the server 103. The network 102 may include various types of connections, such as wired and/or wireless communication links, and the like.

A user may use the terminal devices 101 to interact with the server 103 through the network 102, so as to receive or send messages and the like. The terminal devices 101 may be various electronic devices including, but not limited to, smart phones, tablet computers, laptop computers, and the like.

At least one of the method for training an adversarial network model and the method for building a character library provided by the embodiments of the present disclosure may generally be performed by the server 103. Correspondingly, at least one of an apparatus for training an adversarial network model and an apparatus for building a character library provided by the embodiments of the present disclosure may generally be set in the server 103. The method for training an adversarial network model and the method for building a character library provided by the embodiments of the present disclosure may also be performed by a server or a server cluster that is different from the server 103 and may communicate with a plurality of terminal devices 101 and/or servers 103. Correspondingly, the apparatus for training the adversarial network model and the apparatus for building the character library provided by the embodiments of the present disclosure may also be set in a server or server cluster that is different from the server 103 and may communicate with a plurality of terminal devices 101 and/or servers 103.

In the embodiments of the present disclosure, the adversarial network model may include a generation model and a discrimination model. The generation model is used to generate a new image based on a preset image, and the discrimination model is used to discriminate a difference (or a degree of similarity) between the generated image and the preset image. An output of the discrimination model may be a probability value ranging from 0 to 1, the lower the probability value. The greater the difference between the generated image and the preset image. The higher the probability value, the more similar the generated image is to the preset image. In the training process of the adversarial network model, the goal of the generation model is to generate an image that is as close to the preset image as possible, the goal of the discrimination model is to try to distinguish the image generated by the generation model from the preset image, and the two models are continuously updated and optimized during the training process. A training stop condition may be set according to the actual requirements of the user, so that the adversarial network model that meets user's requirements may be obtained in case that the training stop condition is met.

FIG. 2 is a flowchart of a method for training an adversarial network model according to an embodiment of the present disclosure.

As shown in FIG. 2, the method 200 for training an adversarial network model may include operations S210 to S240.

In operation S210, a generated character is generated based on a content character sample and a style character sample and a reconstructed character is generated based on the content character sample, by using the generation model.

For example, the content character sample may be an image (image X) having a content of a base font, and the base font may be, for example, a regular font such as a Chinese font of Kai or Song. The style character sample may be an image (image Y) having a content of a style font, and the style font may be a font having a handwritten style or a font having a specific artistic style, etc. The content of image X may be characters, and the content of image Y may also be characters.

The generated character (image $\overline{X}$) may have the same content as the image X and may have the same font style as the image Y. The generated character may be obtained by transferring the font style of the image Y to the image X. The reconstructed character may be an image (image X) obtained by learning and reconstructing the content and font style of the image X.

For example, the generation model may extract a content feature $Z_X$ of the image X, extract a font style feature $Z_Y$ of the image Y, and generate the style-transferred generated character (image $\overline{X}$) based on the content feature $Z_X$ of the image X and the font style feature $Z_Y$ of the image Y. The generation model may also extract a font style feature $Z_X$, of the image X, and generate the reconstructed character (image X) based on the content feature $Z_X$ of the image X and the font style feature $Z_X$, of the image X.

In operation S220, a basic loss of the generation model is calculated based on the generated character and the reconstructed character, by using the discrimination model.

For example, the basic loss of the generation model may include a font style difference between the generated character (image $\overline{X}$) and the style character sample (image Y) and a difference between the reconstructed character (image $\hat{X}$) and the content character sample (image X). The discrimination model may be used to discriminate the font style difference between the image $\overline{X}$ and the image Y. The difference between image $\hat{X}$ and the image X may include a difference in content and a difference in font style.

For example, for the image $\overline{X}$ and the image Y, the discrimination model may output a probability value representing the font style difference between the image $\overline{X}$ and the image Y, and a range of the probability value is [0, 1]. The closer the probability value is to 0, the greater the font style difference between the image $\overline{X}$ and the image Y.

For the image $\hat{X}$ and the image X, a content feature and a font style feature may be extracted from each of the image X and the image X, and a content feature difference and a font style feature difference between the image $\hat{X}$ and

the image X may be calculated. The font style difference between the image $\overline{X}$ and the image Y is determined based on the content feature difference and the font style feature difference between the image $\hat{X}$ and the image X.

In operation S230, a character loss of the generation model is calculated through classifying the generated character by using a trained character classification model.

For example, the trained character classification model may be obtained by training a ResNet18 neural network. The character classification model may be trained by using a supervised machine learning method. During the training process, an input of the character classification model may include a preset image and a label, where the label may represent a content of the preset image, and an output may indicate that the preset image is classified into one of a plurality of labels. For example, the content of the preset image may be the Chinese character "我", and the label of the preset image is "我". After training through supervised learning, the trained character classification model may determine the label of the image to be classified, and the label of the image to be classified represents the content of the image to be classified.

A label of the image $\overline{X}$ may be determined through classify the generated character (image $\overline{X}$) by using the trained character classification model, and the label of the image $\overline{X}$ represents a content of the image $\overline{X}$. Since the content of the image $\overline{X}$ is unchanged with respect to the content of character in the image X, a content label of image $\overline{X}$ itself indicates the content of image X. The character loss may be calculated based on the difference between the label of the image $\overline{X}$ obtained by the classification model and the content label of the image $\overline{X}$ itself, and the character loss may represent a difference between the content of the image $\overline{X}$ and the content of the image X.

According to the embodiments of the present disclosure, the trained character classification model is introduced to calculate the character loss, and the difference between the content of the image $\overline{X}$ and the content of image X is constrained by the character loss, which may increase the stability of the generated character, thereby improving the stability of the appearance of the generated style font.

In operation S240, a parameter of the generation model is adjusted based on the basic loss and the character loss.

For example, a sum of the basic loss and the character loss may be used as a total loss to adjust the parameter of the generation model, so as to obtain an updated adversarial network model. For the next content character sample (image X) and style character sample (image Y), the updated adversarial network model is used to return to operation S210. The above training process is repeated until the preset training stop condition is reached. Then the adjusting of the parameter of the generation model is stopped, and the trained adversarial network model is obtained. The training stop condition may include a condition that a preset number of trainings have been achieved, or a condition that a similarity between the font style of the image $\overline{X}$ generated by the generation model and the font style of the image Y satisfies a preset condition, etc.

In the embodiments of the present disclosure, the style character having the style font and the content character having the base font are used as the training data and the character classification model is introduced to train the adversarial network model, so that the trained adversarial network model may achieve more accurate font transfer.

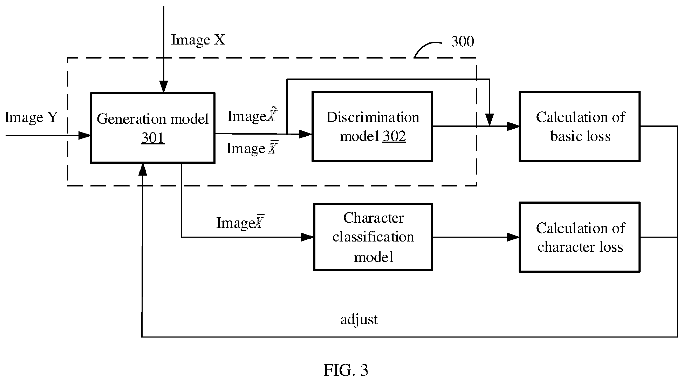

FIG. 3 is a schematic diagram of a method for training an adversarial network model according to an embodiment of the present disclosure.

As shown in FIG. 3, the adversarial network model 300 includes a generation model 301 and a discrimination model 302.

A content character sample (image X) having a content of a base font and a style character sample (image Y) having a content of a style font are input to the generation model 301 of the adversarial network model 300. The generation model 301 may generate a generated character (image $\overline{X}$) having the content of the image X and the font style of the image Y based on the image X and the image Y, and may obtain a reconstructed character (image $\hat{X}$) by learning and reconstructing the content and the font style of the image X.

The discrimination model 302 may discriminate a font style difference between the image $\overline{X}$ and the image Y. For example, the discrimination model 302 may extract font style features from the image $\overline{X}$ and the image Y respectively, and calculate the font style difference between the image $\overline{X}$ and the image Y based on the extracted font style features of the image $\overline{X}$ and the image Y. A first part of a loss of the generation model 301 may be determined by the font style difference between the image $\overline{X}$ and the image Y, and the first part of the loss may be called an adversarial loss.

The image $\hat{X}$ is reconstructed from the image X, and a difference between the image $\hat{X}$ and the image X includes a font style difference and a character content difference. A front style feature and a content feature may be extracted from each of the image $\hat{X}$ and the image X, and the difference between the image $\hat{X}$ and the image X is determined according to the difference between the font style feature of the image $\hat{X}$ and the font style feature of the image X and the difference between the content feature of the image $\hat{X}$ and the content feature of the image X. A second part of the loss of the generation model 301 may be determined by the difference between the image $\hat{X}$ and the image X, and the second part of the loss may be called a reconstruction loss.

A character classification model 303 may classify the image $\overline{X}$, and the obtained classification result represents the content of the image $\overline{X}$. A content label of image $\overline{X}$ itself indicates the content of image X. A third part of the loss of the generation model 301 may be determined according to a difference between the content of the image $\overline{X}$ obtained by the classification model and the content label of the image $\overline{X}$ itself, and the third part of the loss may be called a character loss.

A basic loss of the generation model 301 may be calculated based on the adversarial loss and the reconstruction loss of the generation model 301. A total loss of the generation model 301 may be calculated based on the basic loss and the character loss. A parameter of the generation model 301 may be adjusted according to the total loss of the generation model 301, so as to obtain an updated generation model 301. For the next set of images X and Y, the above process is repeated by using the updated generation model 301 until a preset training stop condition is reached.

According to the embodiments of the present disclosure, the font style difference between the generated character and the style character sample is constrained by the basic loss, which may improve the transfer effect of the font style of the adversarial network model. The difference between the content of the generated character and the content of the content character sample is constrained by the character loss, which may improve the content consistency of the character in the generated character, thereby improving the quality of the style font generated by the adversarial network model.

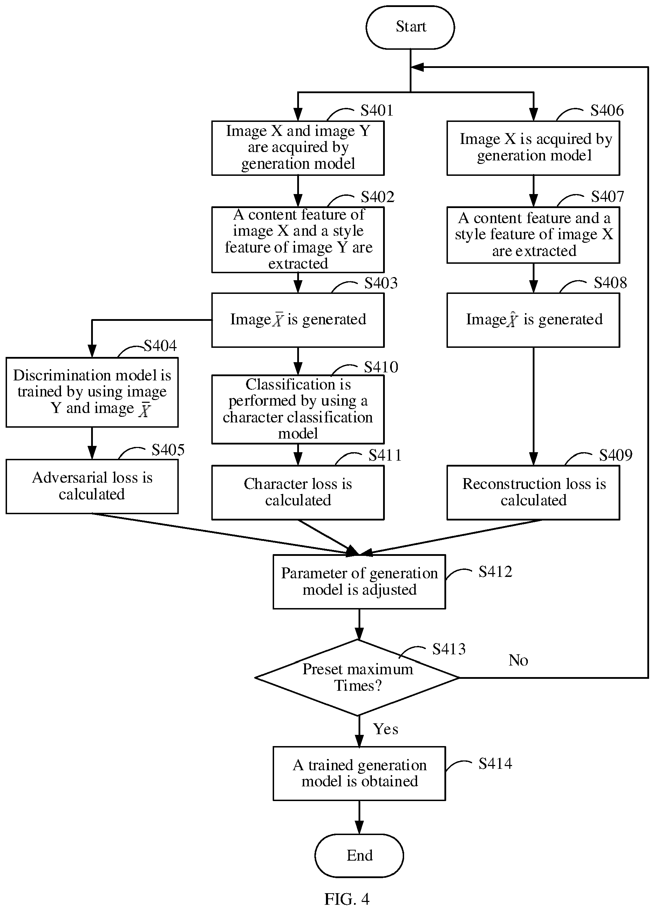

FIG. 4 is a flowchart of a method for training an adversarial network model according to another embodiment of the present disclosure.

As shown in FIG. 4, the method includes operations S401 to S414.

In operation S401, the generation model acquires a content character sample (image X) and a style character sample (image Y).

For example, the image X contains a content having a base font such as a Chinese font of Kai or Song, and the image Y contains a content having a style font such as handwriting style or a specific artistic style.

In operation S402, the generation model extracts a content feature of the image X and a style feature of the image Y.

For example, a content feature $Z_X$ of the image X is extracted, and a font style feature $Z_Y$ of the image Y is extracted.

In operation S403, the generation model generates a generated character (image $\overline{X}$) based on the content feature of the image X and the style feature of the image Y.

For example, the image $\overline{X}$ is generated based on the content feature $Z_X$ of image X and the font style feature $Z_Y$ of the image Y. The image $\overline{X}$ has the same content as the image X and has the same font style as the image Y.

In operation S404, the image Y and the image $\overline{X}$ are used to train the discrimination model.

For example, the discrimination model may extract a font style feature of the image $\overline{X}$ and a font style feature of the image Y, calculate the font style difference between image $\overline{X}$ and the image Y based on the extracted font style features of the image $\overline{X}$ and the image Y, and output a probability value representing the font style difference between image $\overline{X}$ and image Y. A range of the probability value is [0, 1], in which the closer the probability value is to 0, the greater the font style difference between the image $\overline{X}$ and the image Y. A discrimination result of the discrimination model may represent a discrimination error of the discrimination model itself. Therefore, a discrimination loss of the discrimination model may be calculated based on the discrimination result of the discrimination model. The discrimination loss of the discrimination model may be expressed based on the following equation (1).

$$\lambda_D L_D = \lambda_D \left( E_y[\log(1 - D(y))] + E_x\left[\log\left(D(\overline{x})\right)\right] \right) \quad (1)$$

$\lambda_D$ represents a weight of the discrimination loss, y represents the style character sample, E represents an expectation operator, $\overline{x}$ represents the generated character, and D() represents an output of the discrimination model. A parameter of the discrimination model may be adjusted based on the discrimination loss of the discrimination model, so as to complete one round of training of the discrimination model.

In operation S405, an adversarial loss of the generation model is calculated.

The discrimination result of the discrimination model may also characterize the error of the generation model in generating the image $\overline{X}$, so the adversarial loss of the generation model may be calculated based on the discrimination result of the discrimination model. The adversarial loss of the generation model may be calculated based on the following equation (2).

$$L_{GAN} = E_y[\log D(y)] + E_x\left[\log\left(1 - D(\overline{x})\right)\right] \quad (2)$$

$L_{GAN}$ represents the adversarial loss, x represents the content character sample, y represents the style character sample, E represents an expectation operator, $\bar{x}$ represents the generated character, D() represents an output of the discrimination model, and G(x,{x}) represents the reconstructed character generated by the generation model based on the content character sample x.

In operation S406, the generation model acquires an image X.

In operation S407, the generation model extracts a content feature and a font style feature of the image X.

In operation S408, the generation model generates a reconstructed image X based on the content feature and the font style feature of the image X.

In operation S409, a reconstruction loss of the generation model is calculated.

For example, the image X contains content a content having a base font such as a Chinese font of Kai or Song. A content feature $Z_X$ of the image X is extracted, and a font style feature $Z_{X'}$ of the image X is extracted. The image $\hat{X}$ is generated based on the content feature $Z_X$ of the image X and the font style feature $Z_{X'}$ of the image X. Since the image X is reconstructed from the image X, the reconstruction loss of the generation model may be calculated based on a difference between the image $\hat{X}$ and the image X. The reconstruction loss of the generation model may be calculated based on the following equation (3).

$$L_R = [|x - G(x, \{x\})|] \qquad (3)$$

$L_R$ represents the reconstruction loss, x represents the content character sample, E represents an expectation operator, and G(x,{x}) represents the reconstructed character generated by the generation model based on the content character sample x.

It should be noted that, operations S406 to S409 may be performed in parallel with operations S401 to S405. However, the embodiments of the present disclosure are not limited to this, and the two sets of operations may be performed in other sequences, for example, operations S406 to S409 may be performed before operations S401 to S405, or operations S401 to S405 may be performed before operations S406 to S409.

In operation S410, the image $\overline{X}$ is classified by using a character classification model.

A label of the image $\overline{X}$ may be determined through classifying the image $\overline{X}$ by using the trained character classification model, and the label of the image $\overline{X}$ represents the content of the image $\overline{X}$.

In operation S411, a character loss of the generation model is calculated.

Since the content of the character in the image $\overline{X}$ is unchanged with respect to the content of the character in the image X, the content label of image $\overline{X}$ itself indicates the content of the image X. The character loss of the generation model may be calculated based on a difference between the label of the image $\overline{X}$ obtained by the classification model and the content label of the image $\overline{X}$ itself. The character loss of the generation model may be calculated based on the following equation (4).

$$L_C = \log(P_i(\overline{x})) \qquad (4)$$

$L_C$ represents the character loss, $\overline{x}$ represents the generated character, and $P_i(\overline{x})$ represents a probability that that a content of the generated character determined by the character classification model falls within a category indicated by the content label of the generated character.

In operation S412, a parameter of the generation model are adjusted based on the adversarial loss, the character loss and the reconstruction loss of the generation model.

For example, a total loss of the generation model may be obtained based on the adversarial loss, the character loss and the reconstruction loss. The total loss L of the generation model may be calculated based on the following equation (5). The parameter of the generation model is adjusted based on the total loss of the generation model, so as to complete one round of training of the generation mode.

$$L = \lambda_{GAN}L_{GAN} + \lambda_R L_R + \lambda_C L_C \qquad (5)$$

$L_{GAN}$ represents the adversarial loss, $L_R$ represents the reconstruction loss, $L_C$ represents the character loss, $\lambda_{GAN}$ represents a weight of the adversarial loss, $\lambda_R$ represents a weight of the reconstruction loss, and $\lambda_C$ represents a weight of the character loss.

In operation S413, it is judged whether the adjustment times are greater than preset maximum times. If yes, operation S414 is performed. Otherwise, operations S401 and S406 are returned.

For example, the preset maximum times may be 100. If the adjustment times of the parameter of the generation model are greater than 100, the training is stopped, so as to obtain a usable generation model. Otherwise, return to operation S401 and operation S406 to perform the next round of training.

In operation S414, a trained generation model is obtained.

According to the embodiments of the present disclosure, the font style difference between the generated character and the style character sample is constrained by the basic loss, which may improve the transfer effect of the font style of the adversarial network model. The difference between the content of the generated character and the content of the content character sample is constrained by the character loss, which may improve the character consistency of the generated character of the adversarial network model, thereby improving the quality of the style font generated by the adversarial network model.

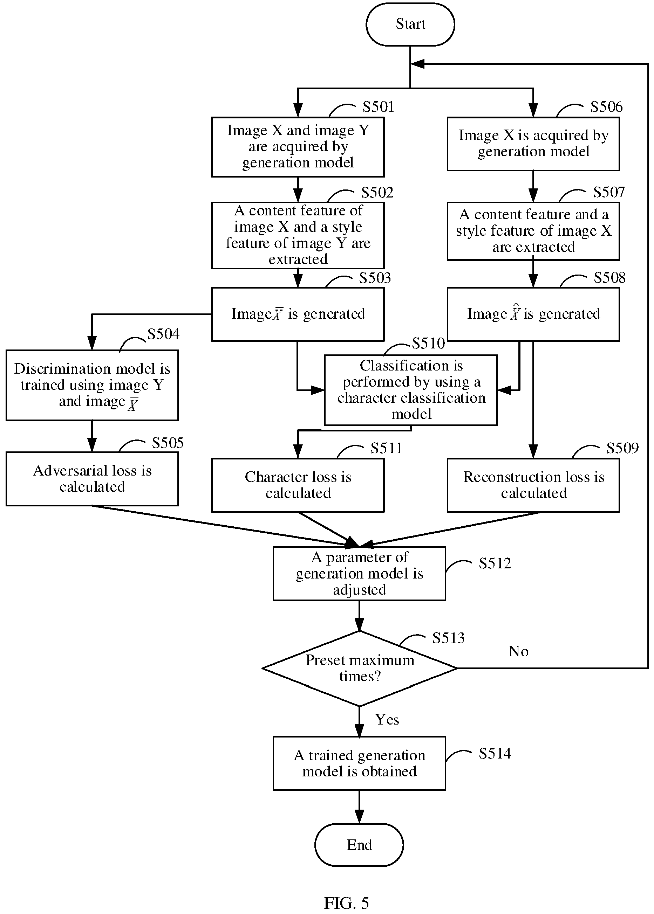

FIG. 5 is a flowchart of a method for training an adversarial network model according to another embodiment of the present disclosure.

As shown in FIG. 5, the method includes operations S501 to S514. The difference between FIG. 5 and FIG. 4 is that operations S510 to S511 of FIG. 5 are different from operations S410 to S411 of FIG. 4. Operations S501 to S509 of FIG. 5 are the same as operations S401 to S409 of FIG. 4, and operations S512 to S514 of FIG. 5 are the same as operations S412 to S414 of FIG. 4. For brevity of description, only operations (operation S510 to operation S511) in FIG. 5 that are different from those in FIG. 4 will be described in detail below.

In operation S501, a generation model acquires a content character sample (image X) and a style character sample (image Y).

In operation S502, the generation model extracts a content feature of the image X and a style feature of the image Y.

In operation S503, the generation model generates a generated character (image $\overline{X}$) based on the content feature of the image X and the style feature of the image Y.

In operation S504, the discrimination model is trained by using the image Y and the image $\overline{X}$.

In operation S505, an adversarial loss of the generation model is calculated.

In operation S506, the generation model acquires an image X.

In operation S507, the generation model extracts a content feature and a font style feature of the image X.

In operation S508, the generation model generates a reconstructed image X based on the content feature and the font style feature of the image X.

In operation S509, a reconstruction loss of the generation model is calculated.

It should be noted that, operations S506 to S509 may be performed in parallel with operations S501 to S505l. However, the embodiments of the present disclosure are not limited to this, and the two sets of operations may be performed in other orders. For example, operations S506 to S509 are performed before operations S501 to S505. Alternatively, operations S501 to S505 are performed first, and then operations S506 to S509 are performed.

In operation S510, the image $\overline{X}$ and the image $\overline{X}$ are classified by using a character classification model, respectively.

The trained character classification model is used to classify an image $\overline{X}$, so as to determine a label of the image $\overline{X}$, and the label of the image $\overline{X}$ represents a content of the image $\overline{X}$.

The trained character classification model is used to classify an image X, so as to determine a label of the image $\hat{X}$, and the label of the image $\hat{X}$ represents a content of the image $\hat{X}$

In operation S511, a character loss of the generation model is calculated.

The character loss of the generation model includes a character loss for the generated character in the image $\overline{X}$ and a character loss for the reconstructed character in the imageX.

Since the content of the character in the image $\overline{X}$ is unchanged with repsect to the content of the character in the image X, a content label of image $\overline{X}$ itself indicates the content of image X. The character loss for the generated character in the image $\overline{X}$ may be calculated based on a difference between the label of the image $\overline{X}$ obtained by the classification model and the content label of the image $\overline{X}$ itself.

Since the image X is reconstructed from the image X, a content label of image X itself indicates the content of image X. The character loss for the reconstructed character in the image X may be calculated based on a difference between the label of the image X obtained by the classification model and the content label of the image $\hat{X}$ itself.

In operation S512, a parameter of the generation model is adjusted based on the adversarial loss, the character loss and the reconstruction loss of the generation model.

In operation S513, it is determined whether the adjustment has been performed more than preset maximum times. If yes, operation S514 is performed. Otherwise, the process returns to operations S501 and S506.

In operation S514, a trained generation model is obtained.

According to the embodiments of the present disclosure, the difference between the content of the generated character and the content of the content character sample is constrained by the character loss for the generated character, and the difference between the content of the reconstructed character and the content of the content character sample is constrain by the character loss for the reconstructed character, which may increase the character consistency of the generated character and the reconstructed character, thereby improving the quality of style font generated by the adversarial network model.

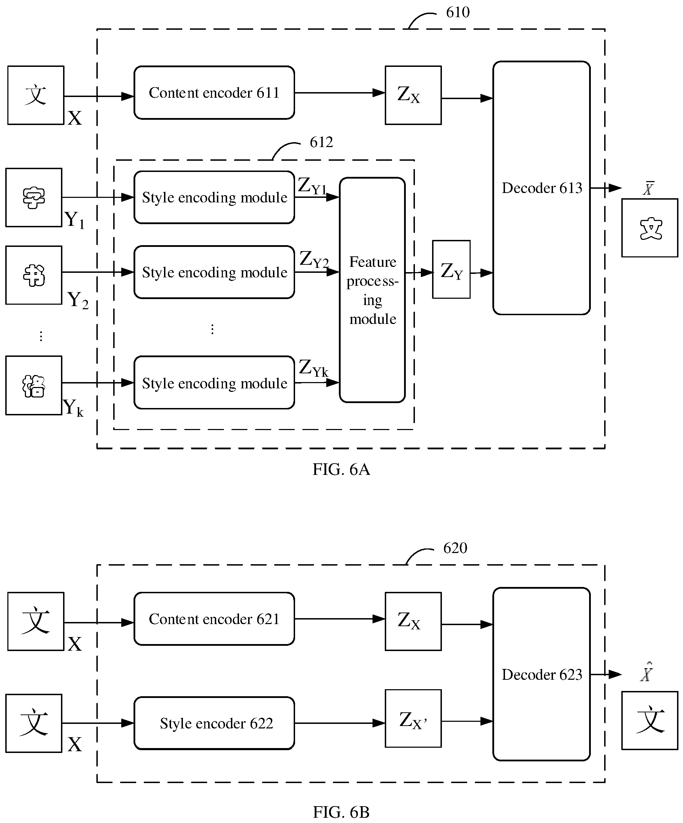

FIG. 6A is a schematic diagram of a generation model according to an embodiment of the present disclosure.

As shown in FIG. 6A, the generation model 610 may include a content encoder 611, a style encoder 612 and a decoder 613. The style encoder 612 may include a plurality of style encoding modules and a feature processing module.

A content character sample (image X) is input into the content encoder 611. The content encoder 611 extracts a content feature $Z_X$ of the image X.

A plurality of style character samples (image $Y_1$, image $Y_2$...image $Y_k$, where k is an integer greater than 2) are respectively input into a plurality of style encoding modules of the style encoder 612. Each style encoding module extracts a font style feature from the image Yi (1 $\leq$i$\leq$k), so as to obtain a plurality of font style features ($Z_{Y1}$, $Z_{Y2}$, ... $Z_{Yk}$). The feature processing module may obtain an integrated font style feature $Z_Y$ based on the plurality of font style features. For example, the feature processing module averages the plurality of font style features to obtain the comprehensive font style feature $Z_Y$.

The content feature $Z_X$ and the integrated font style feature $Z_Y$ are input to the decoder 613. The decoder 613 generates and outputs a generated character (image $\overline{X}$) based on the content feature $Z_X$ and the comprehensive font style feature $Z_Y$.

For example, as shown in Fig. 6A, a content of the image X is a Chinese character "文" in a font of Kai, contents of the image $Y_1$, image $Y_2$...image $Y_k$ are Chinese characters "字", "书"..."格" in a special font respectively, a content of the output image $\overline{X}$ of the decoder 613 is a Chinese character "文" in a special font.

According to the embodiments of the present disclosure, by constraining the font style difference between the generated character and the style character sample, the style transfer effect of the generated character may be improved, the stability of the generated style font is ensured, and the appearance of the generated style font is improved.

FIG. 6B is a schematic diagram of a generation model according to another embodiment of the present disclosure.

As shown in FIG. 6B, the generation model 620 may include a content encoder 621, a style encoder 622 and a decoder 623.

A content character sample (image X) is input into the content encoder 621. The content encoder 621 extracts a content feature $Z_X$ of the image X.

The content character sample (image X) is input into the style encoder 622. The style encoder 622 extracts a font style feature $Z_{X'}$ of the image X.

The content feature $Z_X$ and the font style feature $Z_{X'}$ of the image X are input into the decoder 623. The decoder 623 generates a reconstructed character (image $\hat{X}$) based on the content feature $Z_X$ and the font style feature $Z_{X'}$ and outputs the reconstructed character (image $\hat{X}$).

For example, as shown in FIG. 6B, a content of the image X is a Chinese character "文" in a Chinese font of Kai, and a content of the output image X of the decoder 623 is also the Chinese character "文" in the Chinese font of Kai, which is consistent with the content of the image X.

According to the embodiments of the present disclosure, by constraining the consistency of content and font style between the reconstructed character and the content character sample, the character consistency of the reconstructed character generated by the generation model may be improved, thereby further improving the quality of the generated style font.

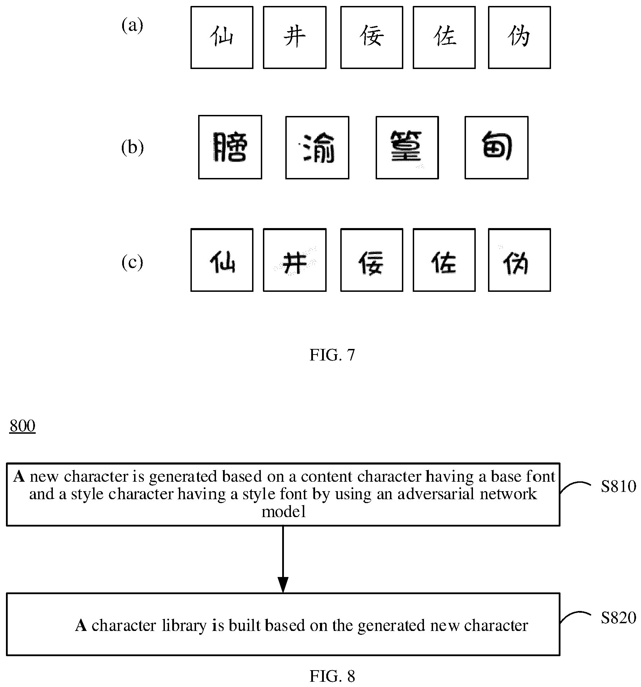

FIG. 7 is a diagram of an appearance of a generated style font according to an embodiment of the present disclosure.

As shown in FIG. 7, part (a) represents a plurality of images having a content in a base font (content character samples), each image includes a character having the base font, and the base font is, for example, the Chinese font of Kai. Part (b) represents a plurality of images having a content of a style font (style font samples), each image includes a character having the style font, and the style font may be user-set. Part (c) represents a plurality of images containing generated characters. The plurality of images in part (c) correspond to the plurality of images in part (a) respectively. Each image in part (c) includes a generated character being identical to the character in the corresponding image in part (a), and having a font style identical to the font style in part (b). It should be understood that the generated characters in part (c) are generated based on the plurality of images in part (a) and the plurality of images in part (b) by using the above-mentioned generation model.

In the embodiments of the present disclosure, the style character having the style font and the content character having the base font are used as the training data, and the character classification model is introduced to train the adversarial network model, so that the trained adversarial network model may achieve more accurate font transfer.

FIG. 8 is a flowchart of a method for building a character library according to an embodiment of the present disclosure.

As shown in FIG. 8, the method 800 for building a character library may include operations S810 to S820.

In operation S810, a new character is generated based on a content character having a base font and a style character having a style font by using an adversarial network model.

The adversarial network model is trained according to the above method for training an adversarial network model.

For example, the content character (such as image X') contains a content of the base font such as a Chinese font of Kai or Song, the style character (such as image Y') contains a style character content such as handwritten font. A content feature of image X' and a font style feature of image Y' are extracted by using the trained adversarial network model, and a new character is generated based on the content feature of the image X' and the font style feature of the image Y'. The new character has the same content as the content character and has the same font style as the style character.

In operation S820, a character library is built based on the generated new character.

For example, the new character having the style font is stored, so as to build the character library having the style font. The character library may be applied to an input method. It is possible for a user to directly obtain a character having a specific style font by using the input method based on the character library, satisfying user's diverse requirements and improving the user experience.

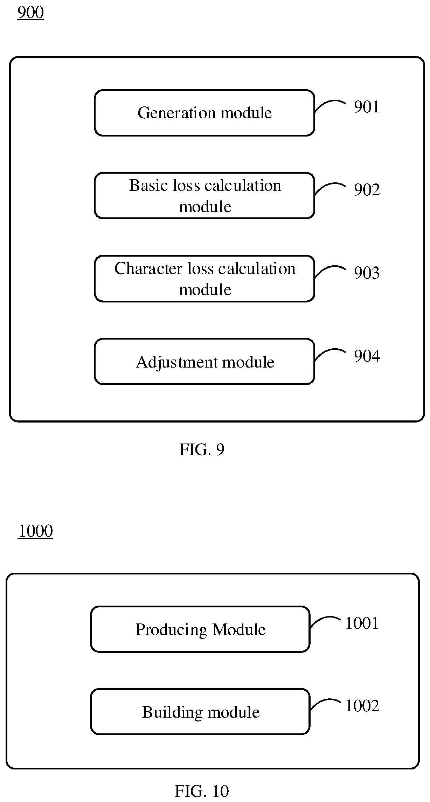

FIG. 9 is a block diagram of an apparatus for training an adversarial network model according to an embodiment of the present disclosure.

As shown in FIG. 9, the apparatus 900 for training an adversarial network model may include a generation module 901, a basic loss calculation module 902, a character loss calculation module 903 and an adjustment module 904.

The generation module 901 is configured to generate a generated character based on a content character sample having a base font and a style character sample having a style font and generating a reconstructed character based on the content character sample, by using the generation model.

The basic loss calculation module 902 is configured to calculate a basic loss of the generation model based on the generated character and the reconstructed character, by using the discrimination model.

The character loss calculation module 903 is configured to calculate a character loss of the generation model through classifying the generated character by using a trained character classification model.

The adjustment module 904 is configured to adjust a parameter of the generation model based on the basic loss and the character loss.

A content label of the content character sample is identical to a content label of the generated character which is generated based on the content character sample, and the character loss calculation module 903 includes a generated character classification unit and a character loss calculation unit.

The generated character classification unit is configured to classify the generated character by using the character classification model, so as to determine a content of the generated character.

The character loss calculation unit is configured to calculate the character loss based on a difference between the content of the generated character determined by the character classification model and the content label of the generated character.

The basic loss calculation module 902 includes an adversarial loss calculation unit, a reconstruction loss calculation unit and a basic loss calculation unit.

The adversarial loss calculation unit is configured to calculate an adversarial loss of the generation model through training the discrimination model by using the generated character and the style character sample.

The reconstruction loss calculation unit is configured to calculate a reconstruction loss of the generation model based on a difference between the reconstructed character and the content character sample.

The basic loss calculation unit is configured to calculate the basic loss of the generation model based on the adversarial loss and the reconstruction loss.

The adjustment module 904 includes a total loss calculation unit and an adjustment unit.

The total loss calculation unit is configured to calculate a total loss L of the generation model by the following equations:

$$L = \lambda_{GAN} L_{GAN} + \lambda_R L_R + \lambda_C L_C \qquad (5)$$

$$L_{GAN} = E_y[\log D(y)] + E_x[\log(1 - D(\bar{x}))] \qquad (2)$$

$$L_R = [|x - G(x, \{x\})|] \qquad (3)$$

$$L_C = \log(P_i(\bar{x})) \qquad (4)$$

$L_{GAN}$ represents the adversarial loss, $L_R$ represents the reconstruction loss, $L_C$ represents the character loss, $\lambda_{GAN}$ represents a weight of the adversarial loss, $\lambda_R$ represents a weight of the reconstruction loss, $\lambda_C$ represents a weight of the character loss, x represents the content character sample, y represents the style character sample, and E represents an expectation operator, $\bar{x}$ represents the generated character, D() represents an output of the discrimination model, G(x,{x}) represents the reconstructed character generated by the generation model based on the content character sample x, and $P_i(\bar{x})$ represents a probability that a content of the generated character determined by the character classification model falls within a category indicated by the content label of the generated character.

The adjustment unit is configured to adjust the parameter of the generation model based on the total loss.

A content label of the content character sample is identical to a content label of the reconstructed character generated based on the content character sample, and the character loss calculation module 903 includes a reconstructed character classification unit, an additional character loss calculation unit and an addition unit.

The reconstructed character classification unit is configured to classify the reconstructed character by using the character classification model, so as to determine a content of the reconstructed character.

The additional character loss calculation unit is configured to calculate an additional character loss based on a difference between the content of the reconstructed character determined by the character classification model and the content label of the reconstructed character.

The addition unit is configured to add the additional character loss to the character loss.

The trained character classification model is a character classification model obtained by training a ResNet18 neural network.

The generation model includes a content encoder, a style encoder and a decoder and the generation module includes a generated character generation unit and a reconstructed character generation unit.

The generated character generation unit is configured to extract a content feature from the content character sample by using the content encoder, extract a style feature of the style font from the style character sample by using the style encoder, and generate the generated character by using the decoder based on the content feature and the style feature of the style font.

The reconstructed character generation unit is configured to extract a content feature from the content character sample by using the content encoder, extract a style feature of the base front from the content character sample by using the style encoder, and generate the reconstructed character by using the decoder based on the content feature and the style feature of the base front.

The apparatus 900 for training an adversarial network model further includes a performing module.

The performing module is configured to, after adjusting the parameter of the generation model, return to the generating the generated character and the generating the reconstructed character, for at least another content character sample and at least another style character sample, in response to a total number of the adjusting being less than a preset number.

FIG. 10 is a block diagram of an apparatus for building a character library according to an embodiment of the present disclosure.

As shown in FIG. 10, an apparatus 1000 for building a character library may include a producing module 1001 and a building module 100.

The producing module 1001 is configured to generate a new character by using an adversarial network model based on a content character having a base font and a style character having a style font, wherein the adversarial network model is trained according to the method for training an adversarial network model.

The building module 1002 is configured to build a character library based on the generated new character.

According to the embodiments of the present disclosure, the present disclosure also provides an electronic device, a readable storage medium and a computer program product.

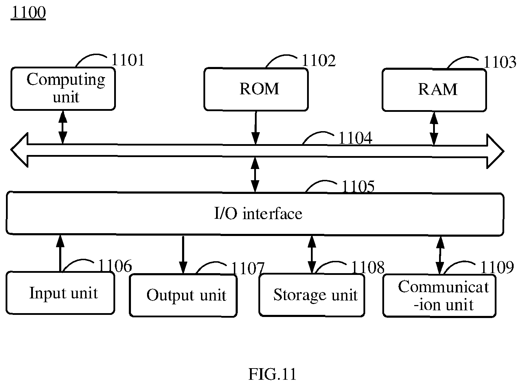

FIG. 11 illustrates a schematic block diagram of an example electronic device 1100 that may be used to implement embodiments of the present disclosure. The electronic device is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. The components shown herein, their connections and relationships, and their functions are merely examples, and are not intended to limit the implementation of the present disclosure described and/or required herein.

As shown in FIG. 11, the device 1100 includes a computing unit 1101, which may execute various appropriate actions and processing according to a computer program stored in a read only memory (ROM) 1102 or a computer program loaded from a storage unit 1108 into a random access memory (RAM) 1103. Various programs and data required for the operation of the device 1100 may also be stored in the RAM 1103. The computing unit 1101, the ROM 1102 and the RAM 1103 are connected to each other through a bus 1104. An input/output (I/O) interface 1105 is also connected to the bus 1104.

The I/O interface 1105 is connected to a plurality of components of the device 1100, including: an input unit 1106, such as a keyboard, a mouse, etc.; an output unit 1107, such as various types of displays, speakers, etc.; a storage unit 1108, such as a magnetic disk, an optical disk, etc.; and a communication unit 1109, such as a network card, a modem, a wireless communication transceiver, etc. The communication unit 1109 allows the device 1100 to exchange information/data with other devices through the computer network such as the Internet and/or various telecommunication networks.

The computing unit 1101 may be various general-purpose and/or special-purpose processing components with processing and computing capabilities. Some examples of computing unit 1101 include, but are not limited to, central processing unit (CPU), graphics processing unit (GPU), various dedicated artificial intelligence (AI) computing chips, various computing units that run machine learning model algorithms, digital signal processing (DSP) and any appropriate processor, controller, microcontroller, etc. The computing unit 1101 executes the various methods and processes described above, such as the method for training an adversarial network model and/or the method for building a character library. For example, in some embodiments, the method for training an adversarial network model and/or the method for building a character library may be implemented as computer software programs, which are tangibly contained in the machine-readable medium, such as the storage unit 1108. In some embodiments, part or all of the computer programs may be loaded and/or installed on the device 1100 via the ROM 1102 and/or the communication unit 1109. When the computer program is loaded into the RAM 1103 and executed by the computing unit 1101, one or more steps of the method for training an adversarial network model and/or the method for building a character library described above may be executed. Alternatively, in other embodiments, the computing unit 1101 may be configured to execute the method for training an adversarial network model and/or the method for building a character library in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, load programmable logic device (CPLD), computer hardware, firmware, software and/or their combination. The various implementations may include: being implemented in one or more computer programs, the one or more computer programs may be executed and/or interpreted on a programmable system including at least one programmable processor, the programmable processor may be a dedicated or general programmable processor. The programmable processor may receive data and instructions from a storage system, at least one input device and at least one output device, and the programmable processor transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specific in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

In the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or device, or any suitable combination of the above-mentioned content. More specific examples of the machine-readable storage media would include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device or any suitable combination of the above-mentioned content.

In order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local area network (LAN), wide area network (WAN) and the Internet.

The computer system may include a client and a server. The client and the server are generally far away from each other and usually interact through the communication network. The relationship between the client and the server is generated by computer programs that run on the respective computers and have a client-server relationship with each other. The server may be a cloud server, a server of a distributed system, or a server combined with a blockchain.

It should be understood that the various forms of processes shown above may be used to reorder, add or delete steps. For example, the steps described in the present disclosure may be executed in parallel, sequentially or in a different order, as long as the desired result of the technical solution disclosed in the present disclosure may be achieved, which is not limited herein.

The above-mentioned implementations do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

**Claims**

1. A method (200) for training an adversarial network model (300) comprising a generation model (301) and a discrimination model (302), the method (200) comprises:

   generating (S210) a generated character based on a content character sample having a base font and a style character sample having a style font and generating a reconstructed character based on the content character sample, by using the generation model;
   calculating (S220) a basic loss of the generation model based on the generated character and the reconstructed character, by using the discrimination model;
   calculating (S230) a character loss of the generation model through classifying the generated character by using a trained character classification model; and
   adjusting (S240) a parameter of the generation model based on the basic loss and the character loss.

2. The method according to claim 1, wherein a content label of the content character sample is identical to a content label of the generated character which is generated based on the content character sample, and the calculating a character loss comprises:

   classifying (S410) the generated character by using the character classification model, so as to determine a content of the generated character; and
   calculating (S411) the character loss based on a difference between the content of the generated character determined by the character classification model and the content label of the generated character.

3. The method according to claim 1 or 2, wherein the calculating a basic loss comprises:

   calculating (S405) an adversarial loss of the generation model through training (S404) the discrimination model by using the generated character and the style character sample;
   calculating (S409) a reconstruction loss of the generation model based on a difference between the reconstructed character and the content character sample; and
   calculating the basic loss of the generation model based on the adversarial loss and the reconstruction loss.

4. The method according to claim 3, wherein the adjusting a parameter of the generation model based on the basic loss and the character loss comprises:

calculating a total loss L of the generation model by:

$$L = \lambda_{GAN}L_{GAN} + \lambda_R L_R + \lambda_C L_C$$

$$L_{GAN} = E_y[logD(y)] + E_x[log(1 - D(\bar{x}))]$$

$$L_R = [|x - G(x,\{x\})|]$$

$$L_C = log(P_i(\bar{x}))$$

wherein $L_{GAN}$ represents the adversarial loss, $L_R$ represents the reconstruction loss, $L_C$ represents the character loss, $\lambda_{GAN}$ represents a weight of the adversarial loss, $\lambda_R$ represents a weight of the reconstruction loss, $\lambda_C$ represents a weight of the character loss, x represents the content character sample, y represents the style character sample, and E represents an expectation operator, $\bar{x}$ represents the generated character, D() represents an output of the discrimination model, G(x,{x}) represents the reconstructed character generated by the generation model based on the content character sample x, $P_i(\bar{x})$ represents a probability that a content of the generated character determined by the character classification model falls within a category indicated by the content label of the generated character; and
adjusting the parameter of the generation model based on the total loss.

5. The method according to claim 2, wherein a content label of the content character sample is identical to a content label of the reconstructed character generated based on the content character sample, and the calculating a character loss further comprises:

classifying (S510) the reconstructed character by using the character classification model, so as to determine a content of the reconstructed character;
calculating an additional character loss based on a difference between the content of the reconstructed character determined by the character classification model and the content label of the reconstructed character; and
adding (S511) the additional character loss to the character loss.

6. The method according to any one of claims 1 to 5, wherein the trained character classification model is a character classification model obtained by training a ResNet18 neural network.

7. The method of any one of claims 1 to 6, wherein the generation model comprises a content encoder (611; 621), a style encoder (612; 622) and a decoder (613; 623),

the generating the generated character comprises: extracting a content feature from the content character sample by using the content encoder (611), extracting a style feature of the style font from the style character sample by using the style encoder (612), and generating the generated character by using the decoder (613) based on the content feature and the style feature of the style font;
the generating the reconstructed character comprises: extracting a content feature from the content character sample by using the content encoder (621), extracting a style feature of the base front from the content character sample by using the style encoder (622), and generating the reconstructed character by using the decoder (623) based on the content feature and the style feature of the base front.

8. The method according to any one of claims 1 to 7, further comprising: after adjusting the parameter of the generation model, returning to the generating the generated character and the generating the reconstructed character, for at least another content character sample and at least another style character sample, in response to a total number of the adjusting being less than a preset number (S413, S513).

9. A method (800) for building a character library, comprising:

   generating (S810) a new character by using an adversarial network model based on a content character having a base font and a style character having a style font, wherein the adversarial network model is trained according to the method of any one of claims 1 to 8; and
   building (S820) a character library based on the generated new character.

10. An apparatus (900) for training an adversarial network model, comprising:

    a generation module (901) configured to generate a generated character based on a content character sample having a base font and a style character sample having a style font and generating a reconstructed character based on the content character sample, by using the generation model;
    a basic loss calculation module (902) configured to calculate a basic loss of the generation model based on the generated character and the reconstructed character, by using the discrimination model;
    a character loss calculation module (903) configured to calculate a character loss of the generation model through classifying the generated character by using a trained character classification model; and
    an adjustment module (904) configured to adjust a parameter of the generation model based on the basic loss and the character loss.

11. The apparatus according to claim 10, wherein a content label of the content character sample is identical to a content label of the generated character which is generated based on the content character sample, and the character loss calculation module comprises:

    a generated character classification unit configured to classify the generated character by using the character classification model, so as to determine a content of the generated character; and
    a character loss calculation unit configured to calculate the character loss based on a difference between the content of the generated character determined by the character classification model and the content label of the generated character.

12. An apparatus (1000) for building a character library, comprising:

    a producing module (1001) configured to generate a new character by using an adversarial network model based on a content character having a base font and a style character having a style font, wherein the adversarial network model is trained according to the apparatus of claim 10 or 11; and
    a building module (1002) configured to build a character library based on the generated new character.

13. An electronic device (1100) , comprising:

    at least one processor (1101); and
    a memory (1108) communicatively connected with the at least one processor; wherein,
    the memory (1108) stores an instruction executable by the at least one processor (1101), and the instruction is executed by the at least one processor (1101) to cause the at least one processor (1101) to perform the method of any one of claims 1 to 9.

14. A non-transitory computer-readable storage medium storing a computer instruction, wherein the computer instruction is configured to cause the computer to perform the method of any one of claims 1 to 9.

15. A computer program product, comprising a computer program, wherein the computer program, when executed by a processor, implements the method of any one of claims 1 to 9.

100

FIG. 1

200

A generated character is generated based on a content character sample and a style character sample and a reconstructed character is generated based on the content character sample, by using the generation model — S210

A basic loss of the generation model is calculated based on the generated character and the reconstructed character, by using the discrimination model — S220

A character loss of the generation model is calculated through classifying the generated character by using a trained character classification model — S230

A parameter of the generation model is adjusted based on the basic loss and the character loss — S240

FIG. 2

Image X

300

Image Y → | Generation model **301** | Image $\hat{X}$ / Image $\overline{X}$ → | Discrimination model **302** | → | Calculation of basic loss |

Image $\overline{X}$ → | Character classification model | → | Calculation of character loss |

adjust

FIG. 3

Start

S401
Image X and image Y are acquired by generation model

S402
A content feature of image X and a style feature of image Y are extracted

S403
Image $\overline{X}$ is generated

S404
Discrimination model is trained by using image Y and image $\overline{X}$

S405
Adversarial loss is calculated

S410
Classification is performed by using a character classification model

S411
Character loss is calculated

S406
Image X is acquired by generation model

S407
A content feature and a style feature of image X are extracted

S408
Image $\hat{X}$ is generated

S409
Reconstruction loss is calculated

S412
Parameter of generation model is adjusted

S413
Preset maximum Times?

No

Yes

S414
A trained generation model is obtained

End

FIG. 4

Start

Image X and image Y are acquired by generation model — S501

A content feature of image X and a style feature of image Y are extracted — S502

Image $\bar{Y}$ is generated — S503

Discrimination model is trained using image Y and image $\bar{Y}$ — S504

Adversarial loss is calculated — S505

Image X is acquired by generation model — S506

A content feature and a style feature of image X are extracted — S507

Image $\hat{X}$ is generated — S508

Classification is performed by using a character classification model — S510

Character loss is calculated — S511

Reconstruction loss is calculated — S509

A parameter of generation model is adjusted — S512

Preset maximum times? — S513

No

Yes

A trained generation model is obtained — S514

End

FIG. 5

610

文
X

Content encoder 611 → $Z_X$

612

Style encoding module → $Z_{Y1}$

Style encoding module → $Z_{Y2}$

Style encoding module → $Z_{Yk}$

$Y_1$

$Y_2$

$Y_k$

Feature processing module → $Z_Y$

Decoder 613 → $\bar{X}$

文

FIG. 6A

620

文
X

Content encoder 621 → $Z_X$

文
X

Style encoder 622 → $Z_{X'}$

Decoder 623 → $\hat{X}$

文

FIG. 6B

(a)

(b)

(c)

FIG. 7

800

| A new character is generated based on a content character having a base font and a style character having a style font by using an adversarial network model | S810 |
| --- | --- |

| A character library is built based on the generated new character | S820 |
| --- | --- |

FIG. 8

900

Generation module — 901

Basic loss calculation module — 902

Character loss calculation module — 903

Adjustment module — 904

FIG. 9

1000

Producing Module — 1001

Building module — 1002

FIG. 10

1100

FIG.11

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 667 006 A (UNIV DALIAN MINZU) 15 September 2020 (2020-09-15) * the whole document * | 1-15 | INV. G06V30/10 G06V10/82 |
| X | LIU JIN ET AL: "Multi-scale multi-class conditional generative adversarial network for handwritten character generation", THE JOURNAL OF SUPERCOMPUTING, SPRINGER US, NEW YORK, vol. 75, no. 4, 19 December 2017 (2017-12-19), pages 1922-1940, XP036759853, ISSN: 0920-8542, DOI: 10.1007/S11227-017-2218-0 [retrieved on 2017-12-19] * Section 3, Section 4 * | 1-15 | |
| X | CN 110 503 598 A (UNIV XIAN TECHNOLOGY) 26 November 2019 (2019-11-26) * the whole document * | 1-15 | |

TECHNICAL FIELDS
SEARCHED (IPC)

G06V

The present search report has been drawn up for all claims

| Place of search | Date of completion of the search | Examiner |
|---|---|---|
| The Hague | 5 July 2022 | Androulidakis, Iosif |

EPO FORM 1503 03.82 (P04C01)

## ANNEX TO THE EUROPEAN SEARCH REPORT
## ON EUROPEAN PATENT APPLICATION NO.

EP 22 15 9504

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2022

| Patent document cited in search report | | Publication date | Patent family member(s) | Publication date |
|---|---|---|---|---|
| CN 111667006 | A | 15-09-2020 | NONE | |
| CN 110503598 | A | 26-11-2019 | NONE | |

For more details about this annex : see Official Journal of the European Patent Office, No. 12/82

EPO FORM P0459